# EUROPÄISCHE PATENTANMELDUNG

(11) **EP 1 764 591 A2**
(43) Veröffentlichungstag der Anmeldung: **21.03.2007**
(21) Anmeldenummer: 06120433.5
(22) Anmeldetag: 11.09.2006
(51) Int. Cl.: G01F 23/284

(54) **Vorrichtung zur Messung von Füllständen in einem Kraftstoffbehälter**

(30) Priorität: 14.09.2005 DE 102005044003; 14.10.2005 DE 102005049278
(71) Anmelder: SIEMENS AKTIENGESELLSCHAFT, 80333 München (DE)
(72) Erfinder: Evers, Daniel, 83624, Otterfing (DE); Nalezinski, Martin, 81541, München (DE); Rumpf, Bernd, 61130, Nidderau-Windecken (DE); Ziroff, Andreas, 81673, München (DE)

(57) **Zusammenfassung**

Gegenstand der Erfindung ist eine Vorrichtung zur Messung von Füllständen in einem Vorratsbehälter mit einer Signalquelle zur Erzeugung von mindestens einem Radarsignal 6, mit einer Sende- und Empfangseinrichtung zum Abstrahlen des Radarsignals 6 und zum Empfangen eines von einem Fluid 2 reflektierten Radarsignals 10 und einer Auswerteeinheit, welche in Abhängigkeit des reflektierten Radarsignals 10 ein dem Füllstand entsprechendes elektrisches Signal erzeugt. Der Vorratsbehälter ist ein Kraftstoffbehälter 1, in dem ein Wellenleiter 5, 11, 12 für das Radarsignal 6, 10 angeordnet ist.

## Beschreibung

Gegenstand der Erfindung ist eine Vorrichtung zur Messung von Füllständen in einem Kraftstoffbehälter mit einer Signalquelle zur Erzeugung von mindestens einem Radarsignal, mit einer Sende- und Empfangseinrichtung zum Abstrahlen des Radarsignals und zum Empfangen eines von einem Fluid reflektierten Radarsignals und einer Auswerteeinheit, welche in Abhängigkeit des reflektierten Radarsignals ein dem Füllstand entsprechendes elektrisches Signal erzeugt.

Aus der EP 1 192 427 B1 ist bekannt, Füllstände von Fluiden in stationären Vorratsbehältern mit einer Radarmesseinheit zu messen. Dazu besitzt der Vorratsbehälter eine Öffnung, in die die Radarmesseinheit mit dem Sender, dem Empfänger und der Messelektronik eingesetzt ist. Ein zur Radarmesseinheit gehörender Flansch verschließt die Öffnung im Vorratsbehälter. Der Sender und Empfänger ist innerhalb des Vorratsbehälters angeordnet. Über eine Bohrung im Flansch steht die Radarelektronik mit dem Sender und Empfänger in Verbindung. Derartige frei strahlende Messvorrichtungen sind für stationär angeordnete und einfach gestaltete Behälter geeignet. Bei bewegten Fluiden, aufgrund nicht stationärer Vorratsbehälter, und/oder Vorratsbehältern mit komplizierter Bauform kommt es zu erheblichen Schwierigkeiten, ein dem Füllstand entsprechendes Signal zu erhalten. Ein weiterer Nachteil besteht bei aggressiven Fluiden darin, dass sowohl der Sender und Empfänger als auch alle anderen mit dem Inneren des Vorratsbehälters in Verbindung stehende Teile der Radarmesseinheit beständig gegen die aggressiven Fluide sein müssen.

Es ist weiterhin bekannt, zur Füllstandsmessung in Kraftstoffbehältern aufgrund ihres einfachen Aufbaus mit einem Dickschichtwiderstand versehene Hebelgeber einzusetzen. Der Nachteil von Hebelgebern besteht darin, dass der komplette Füllstandsgeber im Kraftstoffbehälter und damit im Kraftstoff angeordnet ist. Der Hebelgeber erfordert daher kraftstoffbeständige Materialen. Zum anderen erfordert ein Hebelgeber aufgrund des Schwenkbereichs seines Hebelarms einen nicht unerheblichen Platzbedarf, der aufgrund der heutigen Kraftstoffbehältergeometrien nicht immer uneingeschränkt zur Verfügung steht.

Der Erfindung liegt daher die Aufgabe zugrunde, eine Vorrichtung zum Messen von Füllständen in einem Kraftstoffbehälter zu schaffen, die geeignet ist, um mittels Radar den Füllstand in einem bewegten und/oder kompliziert aufgebauten Vorratsbehälter zu ermitteln.

Erfindungsgemäß wird die Aufgabe dadurch gelöst, dass der Vorratsbehälter ein Kraftstoffbehälter ist, in dem ein Wellenleiter für das Radarsignal angeordnet ist.

Mit dem Wellenleiter wird eine gezielte Führung bzw. Verlaufsbegrenzung des Radarsignals erreicht, um dass das Radarsignal in einen vorgegebenen Bereich zu führen. Die Messung beeinflussende Störeffekte lassen sich auf diese Weise eliminieren oder zumindest minimieren. Da der Wellenleiter senkrecht zum Verlauf der Messstrecke geringe Abmessungen aufweist, benötigt er im Gegensatz zu einem Hebelgeber einen nur geringen Bauraum, so dass die erfindungsgemäße Vorrichtung breitere Einsatzmöglichkeiten besitzt. Weiterhin besitzt der Wellenleiter eine hohe mechanische Robustheit, die auf das Fehlen bewegter Teile zurückzuführen ist.

In einer vorteilhaften Ausgestaltung ist der Wellenleiter ein Hohlleiter. Diese Ausbildung als Hohlleiter hat den Vorteil, dass das in dem Hohlleiter befindliche Fluid bei auf den Kraftstoffbehälter einwirkenden Kräften gedämpft wird. Zumindest ist der Flüssigkeitsspiegel im Hohlleiter geringeren Bewegungen unterworfen als der Flüssigkeitsspiegel des restlichen Fluids im Kraftstoffbehälter. Die Messung mittels Radar kann dabei nach dem FMCW-Verfahren (Frequency Modulated Continous Wave) erfolgen. Das verwendete Frequenzband reicht dabei von 3 GHz bis 0,3 GHz.

Eine weitere Dämpfung des im Hohlleiter befindlichen Fluids wird mit einem im Hohlleiter angeordneten Schwimmer erreicht. Die mechanische Robustheit der Vorrichtung wird hierbei durch die Anordnung eines Schwimmers als bewegtes Teil nicht beeinträchtigt.

Der Verbesserung des reflektierten Radarsignals dient es, wenn der Schwimmer zumindest auf der der Sende- und Empfangseinheit zugewandten Seite eine Metallschicht aufweist. Bei dem Schwimmer kann es sich um einen metallisierten Schwimmer aus Nitrophyl handeln.

Eine gute Signalleitung wird gemäß einer weiteren Ausgestaltung dadurch erreicht, dass in dem Wellenleiter koaxial ein Draht für die Signalleitung angeordnet ist. Der Wellenleiter hat in dieser Ausbildung eine abschirmende Wirkung gegenüber äußeren Einflüssen.

In einer anderen Ausgestaltung besteht der Wellenleiter aus zwei parallel zueinander angeordneten Drähten, die mittels einer Brücke für das Radarsignal miteinander verbunden sind, wobei die Brücke als Schwimmer ausgebildet ist. Mit dieser Anordnung wird das Radarsignal über einen Draht bis zu dem Schwimmer geleitet und über den Schwimmer über den anderen Draht wieder zur Sende- und Empfangseinheit zurückgeleitet. Der Schwimmer erfüllt somit zwei Funktionen. Betrieben wird dieser Wellenleiter mit dem CW-Verfahren (Continous Wave). Der Vorteil dieses Verfahrens besteht darin, dass das ISM-Band mit einer Frequenz von 433 MHz genutzt werden kann.

Eine verbesserte Anpassung an den Kraftstoffbehälter wird mit einem Wellenleiter erreicht, der einen nichtlinearen Verlauf aufweist. Eine derartige Ausgestaltung des Wellenleiters erhöht die Einsatzmöglichkeiten der Messvorrichtung. Diese Ausgestaltung erlaubt, dass beide Enden des Wellenleiters, bezogen auf die vertikale Erstreckung, nicht übereinander angeordnet sind. Damit kann beispielsweise das untere Ende des Wellenleiters auch in schwer zugänglichen Bereichen des Kraftstoffbehälters angeordnet sein, während das obere Ende des Wellenleiters in einem gut zugänglichen Bereich angeordnet ist, oder umgekehrt. Die gute Zugänglichkeit ist dabei eine Voraussetzung, um die Messvorrichtung einfach montieren zu können. Damit sind auch dreidimensionale Gestaltungen möglich. Es muss lediglich sichergestellt sein, dass das zu messende Fluid bzw. der Schwimmer ohne zusätzlichen Einfluss innerhalb des Hohlleiters frei steigen und fallen kann, d. h. siphonartige Gestaltungen sind nicht möglich.

In einer anderen Ausgestaltung besitzt der Wellenleiter einen schrägen Verlauf. Mit einer derartigen Anordnung des Wellenleiters lässt sich die Auflösung der Messvorrichtung in einfacher Weise erhöhen, da gegenüber einer senkrechten Anordnung des Wellenleiters eine längere Messstrecke bei gleicher Höhe vorhanden ist.

Es hat sich weiterhin als vorteilhaft erwiesen, die Signalquelle, die Sende- und Empfangseinrichtung und die Auswerteeinheit außerhalb des Kraftstoffbehälters anzuordnen. In dieser Ausgestaltung strahlt die Signalquelle das Radarsignal durch die Behälterwandung in den Wellenleiter ein und empfängt das reflektierte Signal durch die Behälterwandung. Mit der außenliegenden Anordnung wird eine hohe mechanische und chemische Robustheit erreicht, die bei innenliegenden Systemen immer begrenzt ist, oder durch größere Dimensionierung oder entsprechende Werkstoffauswahl mit wesentlich höheren Kosten erreicht werden kann. Insbesondere die außenliegende Elektronik muss nicht durch zusätzliche Schutzmaßnahmen vor dem Kraftstoff geschützt werden. Lediglich innenliegende Wellenleiter ist derart auszubilden, dass er die notwendige mechanische und chemische Robustheit besitzt, was aufgrund seines einfachen Aufbaus ohne große zusätzliche Kosten erfolgen kann. Ein weiterer Vorteil der außenliegenden Anordnung besteht darin, dass kein zusätzlicher Flansch zum Einbringen der Messvorrichtung notwendig ist. Da Flansche immer Stellen erhöhter Permeation von Kraftstoffdämpfen aus dem Kraftstoffbehälter sind, wird mit dieser Ausgestaltung das Permeationsverhalten des Kraftstoffbehälters nicht verschlechtert.

In einer weiteren Ausgestaltung sind die Signalquelle, die Sende- und Empfangseinrichtung und die Auswerteeinheit an der Unterseite des Kraftstoffbehälters angeordnet. Diese Anordnung hat den Vorteil, dass die Messvorrichtung bodenreferenziert ist. Die Bodenreferenzierung ist insofern wichtig, da bei Kraftstoffbehältern aus Kunststoff das Problem auftritt, dass sich der Kraftstoffbehälter, insbesondere der Boden des Kraftstoffbehälters, in Abhängigkeit vom darin enthaltenen Kraftstoff verformt. So ist der Abstand zwischen dem Boden des Kraftstoffbehälters und der oberen Wandung bei einem nahezu vollem Kraftstoffbehälter größer als bei einem nahezu leeren Kraftstoffbehälter. Diese Abstandsänderung, die sich auch auf den Pegel des darin enthaltenen Kraftstoffs auswirkt, führt zu Ungenauigkeiten der Füllstandsmessung, die sich mit einer Bodenreferenzierung eliminieren lassen.

In einer anderen Ausgestaltung sind die Signalquelle, die Sende- und Empfangseinrichtung und die Auswerteeinheit an der Oberseite des Kraftstoffbehälters angeordnet. Diese Ausgestaltung ist insbesondere dann von Vorteil, wenn der unter dem Kraftstoffbehälter zur Verfügung stehende Bauraum begrenzt ist. Ein weiterer Vorteil dieser Anordnung besteht darin, dass die Messvorrichtung in dieser Anordnung zwischen Karosserie und Kraftstoffbehälter relativ gut gegen Umwelteinflüsse geschützt ist. Bei dieser Messanordnung ist aufgrund der fehlenden Bodenreferenzierung, infolge der vom Füllstand und damit gewichtsabhängigen Änderung des Abstandes des Bodens des Kraftstoffbehälters und seiner oberen Wandung, eine Korrektur des Messsignals notwendig.

Eine Korrektur des Messsignals kann bereits dadurch erfolgen, dass nicht nur der abstand zwischen Signalquelle und Flüssigkeitspegel gemessen wird, sondern dass gleichzeitig der Abstand bis zum Boden des Kraftstoffbehälters gemessen wird, und aus beiden Signalen der eigentliche Füllstand ermittelt wird.

In einer anderen Ausgestaltung sind jeweils außerhalb des Kraftstoffbehälters, sowohl an der oberen Wandung und am Boden die Signalquelle, die Sende- und Empfangseinrichtung und die Auswerteeinheit angeordnet.

An mehreren Ausführungsbeispielen wird die Erfindung näher erläutert. Es zeigen:
- Figur 1:: eine schematische Darstellung einer erfindungsgemäßen Vorrichtung mit einem Hohlleiter,
- Figur 2:: einen Kraftstoffbehälter gemäß Figur 1 mit einer Messvorrichtung oberhalb des Kraftstoffbehälters,
- Figur 3:: einen Kraftstoffbehälter gemäß Figur 1 mit zwei Vorrichtungen oberhalb und unterhalb des Kraftstoffbehälters,
- Figur 4:: die erfindungsgemäße Vorrichtung an einem Satteltank und
- Figur 5:: eine weitere Ausführungsform des Wellenleiters in einem Kraftstoffbehälter gemäß Figur 1.

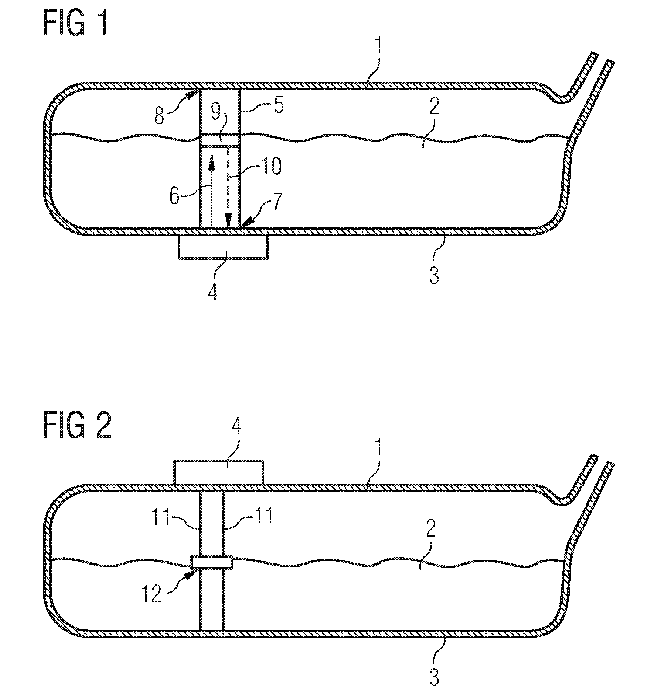

Figur 1 zeigt einen aus Kunststoff bestehenden Kraftstoffbehälter 1 in einem Querschnitt. Der Kraftstoffbehälter 1 ist mit Kraftstoff 2 gefüllt. Unterhalb des Bodens 3 des Kraftstoffbehälter 1 ist eine Signalquelle für ein Radarsignal, eine Sende- und Empfangseinheit und eine Auswerteschaltung als Baueinheit 4 angeordnet. Am Boden 3 ist ein als Hohlleiter 5 ausgebildeter Wellenleiter derart angeordnet, dass ein von der Sende- und Empfangseinheit ausgesandtes Radarsignal 6 durch den Boden 3 in den Kraftstoffbehälter 1 eingestrahlt und vom Hohlleiter 5 vertikal geleitet wird. Der Hohlleiter 5 besitzt am unteren Ende 7 und am oberen Ende 8 Öffnungen, über die das Innere des Hohlleiters 5 mit dem Inneren des Kraftstoffbehälters 1 in Verbindung steht, so dass die Kraftstoffpegel im Kraftstoffbehälter 1 und im Hohlleiter 5 gleich sind. Im Hohlleiter 5 ist ein frei beweglicher Schwimmer 9 angeordnet, der die Reflexion des eingestrahlten Radarsignals 6 verbessert. Zur weiteren Verbesserung der Reflexion ist es möglich, die Unterseite des Schwimmers 9 zu metallisieren. Das von der Unterseite des Schwimmers 9 reflektierte Radarsignal 10 wird über die Sende- und Empfangseinheit in der Baueinheit 4 der Auswerteeinheit zugeführt, in der aus der Laufzeit des Radarsignals 6, 10 ein elektrisches Signal für den Füllstand gebildet wird.

Der in Figur 2 dargestellt Kraftstoffbehälter 1 unterscheidet sich von dem Kraftstoffbehälter gemäß Figur 1 dadurch, dass der Wellenleiter aus zwei parallel verlaufenden Drähten 11 und einer die beiden Drähte 11 verbindenden Brücke 12 besteht, wobei die Brücke 12 als Schwimmer ausgebildet ist. Weiterhin ist die Baueinheit 4, welche die Signalquelle, die Sende- und Empfangseinheit und die Auswerteschaltung enthält oberhalb des Kraftstoffbehälters 1 angeordnet. Das Radarsignal 6 wird wiederum durch die Wandung des Kraftstoffbehälters 1 in einen der als Wellenleiter fungierenden Drähte 11 eingestrahlt, von der Brücke 12 in den anderen Draht 11 übergeleitet und über ihn wieder in Richtung der Sende- und Empfangseinheit geführt.

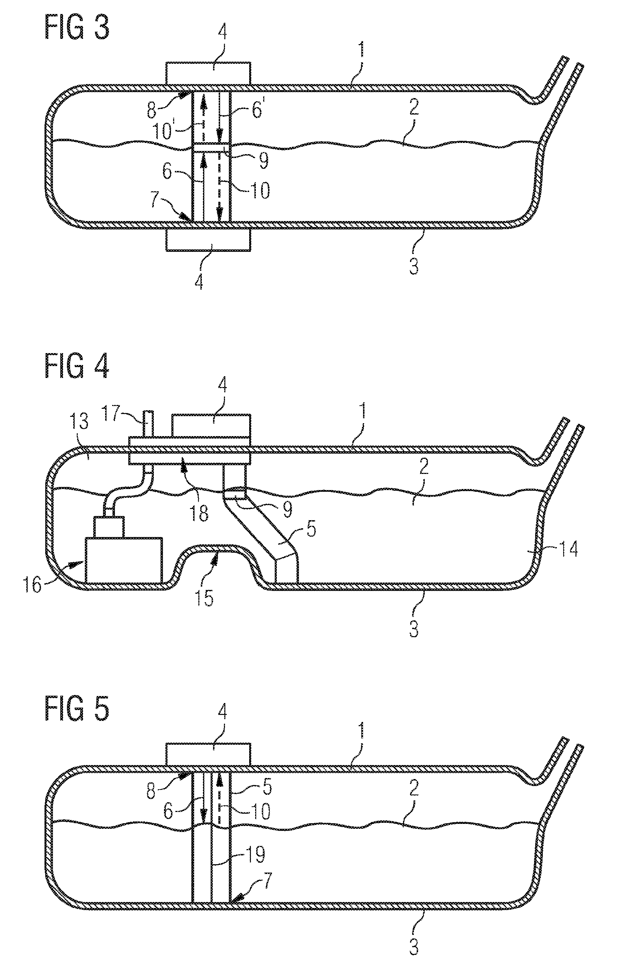

Der Kraftstoffbehälter 1 in Figur 3 weist im Unterschied zu Figur 1 zwei aus Signalquelle, Sende- und Empfangseinheit und Auswerteeinheit bestehende Baueinheiten 4 auf, die oberhalb und unterhalb des Kraftstoffbehälters 1 angeordnet sind. Die von beiden Baueinheiten 4 eingestrahlten Radarsignale 6, 6' werden an der Unter- und Oberseite des Schwimmers 9 reflektiert und den jeweiligen Baueinheiten 4 über den Hohlleiter 5 wieder zugeführt. Mit dieser Messanordnung lässt sich der Füllstand besonders exakt bestimmen, da füllstandsbedingte Änderungen des Abstands zwischen der oberen Wandung und dem Boden 3 von der Auswerteeinheit herausgerechnet werden können.

In Figur 4 ist ein als Satteltank ausgebildeter Kraftstoffbehälter 1 dargestellt, dessen beide Kammern 13, 14 im unteren Bereich des Kraftstoffbehälters 1 durch den Sattel 15 voneinander getrennt sind. In der Kammer 13 ist eine Fördereinheit 16 zum Fördern von Kraftstoff aus dem Kraftstoffbehälter 1 über eine Förderleitung 17 zu einer nicht dargestellten Brennkraftmaschine angeordnet. Die Fördereinheit 16 besitzt einen Flansch 18, der eine Öffnung im Kraftstoffbehälter 1 verschließt. Die Öffnung dient der Montage der Fördereinheit 16. An dem Flansch 18 ist ein Hohlleiter 5 befestigt. Mangels Bauraum in der Kammer 13 weist der Hohlleiter 5 einen gekrümmten Verlauf auf, so dass er über den Sattel 15 bis in den Bodenbereich der Kammer 14 reicht. Die, aufgrund des von der Vertikalen abeichenden Verlaufs des Hohlleiters 5, verlängerte Laufzeit des Radarsignals 6, 10 wird in der Auswerteeinheit berücksichtigt, wodurch trotz des nichtlinearen Verlaufs des Hohlleiters 5 der Füllstand exakt ermittelbar ist. Die nichtlineare Ausbildung des Hohlleiters 5 ermöglicht trotz des fehlenden Bauraums die Anbindung des Hohlleiters 5 an den Flansch 18 der Fördereinheit 16, so dass keine separate Öffnung für die Montage des Hohlleiters 5 vorgesehen werden muss.

Der Wellenleiter 5 unterscheidet sich gegenüber der Ausführungsform gemäß Figur 1 dadurch, dass zusätzlich zur Signalleitung in dem Wellenleiter 5 ein Draht 18 koaxial angeordnet ist.

## Patentansprüche

1. Vorrichtung zur Messung von Füllständen in einem Vorratsbehälter mit einer Signalquelle zur Erzeugung von mindestens einem Radarsignal, mit einer Sende- und Empfangseinrichtung zum Abstrahlen des Radarsignals und zum Empfangen eines von einem Fluid reflektierten Radarsignals und einer Auswerteeinheit, welche in Abhängigkeit des reflektierten Radarsignals ein dem Füllstand entsprechendes elektrisches Signal erzeugt, **dadurch gekennzeichnet , dass** der Vorratsbehälter ein Kraftstoffbehälter (1) ist, in dem ein Wellenleiter (5, 11, 12) für das Radarsignal (6, 10) angeordnet ist.

2. Vorrichtung nach Anspruch 1, **dadurch gekennzeichnet, dass** der Wellenleiter ein Hohlleiter (5) ist.

3. Vorrichtung nach Anspruch 2, **dadurch gekennzeichnet, dass** der Hohlleiter (5) aus Metall besteht.

4. Vorrichtung nach einem der vorhergehenden Ansprüche, **dadurch gekennzeichnet, dass** in dem Wellenleiter (5) ein Draht (19) koaxial angeordnet ist.

5. Vorrichtung nach einem der vorhergehenden Ansprüche, **dadurch gekennzeichnet, dass** der Wellenleiter (5, 11, 12) einen nichtlinearen Verlauf aufweist.

6. Vorrichtung nach einem der vorhergehenden Ansprüche, **dadurch gekennzeichnet, dass** der Wellenleiter (5, 11, 12) einen schrägen Verlauf aufweist.

7. Vorrichtung nach einem der vorhergehenden Ansprüche, **dadurch gekennzeichnet, dass** die Signalquelle, die Sende- und Empfangseinrichtung und die Auswerteeinheit als Baueinheit (4) außerhalb des Kraftstoffbehälters (1) angeordnet sind.

8. Vorrichtung nach einem der vorhergehenden Ansprüche, **dadurch gekennzeichnet, dass** die Signalquelle, die Sende- und Empfangseinrichtung und die Auswerteeinheit als Baueinheit (4) an der Ober- oder Unterseite des Kraftstoffbehälters (1) angeordnet ist.

9. Vorrichtung nach einem der vorhergehenden Ansprüche 1 bis 8, **dadurch gekennzeichnet, dass** die Signalquelle, die Sende- und Empfangseinrichtung und die Auswerteeinheit als Baueinheit (4) jeweils an der Ober- und Unterseite des Kraftstoffbehälters (1) angeordnet sind.
